**Europäisches Patentamt**

**European Patent Office**

**Office européen des brevets**

(19)

(11) Veröffentlichungsnummer: **0 237 904**
**B1**

(12) # EUROPÄISCHE PATENTSCHRIFT

(45) Veröffentlichungstag der Patentschrift:
21.03.90

(21) Anmeldenummer: 87103360.1

(22) Anmeldetag: 09.03.87

(51) Int. Cl.⁴: **F16L 37/08, F16L 37/02,**
**F16L 25/00**

(54) **Anordnung zum lösbaren Verbinden von zwei Rohrteilen.**

(30) Priorität: 20.03.86 DE 3609466

(43) Veröffentlichungstag der Anmeldung:
23.09.87 Patentblatt 87/39

(45) Bekanntmachung des Hinweises auf die Patenterteilung:
21.03.90 Patentblatt 90/12

(84) Benannte Vertragsstaaten:
DE FR GB IT NL SE

(56) Entgegenhaltungen:
EP-A- 0 004 806
CH-A- 647 307
DE-B- 1 124 314
DE-C- 404 941
GB-A- 2 117 856
US-A- 3 413 021

(73) Patentinhaber: Siemens Aktiengesellschaft,
Wittelsbacherplatz 2, D-8000 München 2(DE)

(72) Erfinder: Kess, Herbert, Fröbelstrasse 19, D-8740 Bad
Neustadt(DE)

ACTORUM AG

## Beschreibung

Die Erfindung betrifft eine Anordnung zum lösbaren Verbinden von zwei Rohrteilen gemäß dem Oberbegriff des Anspruchs 1.

Eine solche Anordnung ist durch die DE-C 404 941 bekannt. Die ineinander verschiebbaren Rohrteile dieser Anordnung sind an ihren Enden mit Längsschlitzen und umlaufenden Wulsten versehen, so daß beim Zusammenfügen von zwei Rohrteilen der Wulst des dünneren Rohrteiles in den Wulst des dickeren Rohrteiles spreizend und verschiebungssicher eingreift.

Bei der bekannten Anordnung sind die ineinander fügbaren Enden der Rohrteile gleichmäßig zylindrisch, jedoch mit unterschiedlichen, ein Ineinanderstecken erlaubenden Durchmessern ausgebildet. Hierdurch können sich leicht Undichtigkeiten an der Verbindungsstelle ergeben. Beim Zusammenfügen der Rohrteile muß der Wulst des einsteckbaren Rohrteiles durch einen im Durchmesser engeren Bereich des äußeren, aufnehmenden Rohrteiles hindurchgeschoben werden, wobei die vorgesehenen Längsschlitze ein entsprechendes Zusammendrücken des einsteckbaren Rohrendes erlauben. Der Wulst wird dabei durch die Elastizitätskraft des Rohrmaterials an die Innenwand des äußeren Rohres angepreßt.

Kommt der Wulst des einsteckbaren Rohrteiles mit einem entsprechenden Wulst des äußeren Rohrteiles zur Deckung, federt das Ende des einsteckbaren Rohrteiles auf und die Wulste verrasten miteinander.

Um den Kraftaufwand beim Zusammenfügen der Rohrteile in Grenzen zu halten, darf die Anpressung des Wulstes an die Innenwand nicht zu hoch sein, d.h. die Elastizitätskraft muß entsprechend niedrig bemessen werden. Von dieser Elastizitätskraft hängt aber auch die Festigkeit der Verrastung der Wulste ab. Bei der bekannten Anordnung besteht daher die Gefahr, daß bei einem entsprechenden in Längsrichtung der Rohrteile gerichteten Druck sich die Verrastung der Wulste löst und die Rohrteile weiter ineinander geschoben werden.

Der Erfindung liegt die Aufgabe zugrunde, eine Anordnung gemäß dem Oberbegriff des Anspruchs 1 dahingehend zu verbessern, daß die Einstecktiefe der Rohrteile eindeutig begrenzt ist und keine Undichtigkeiten an der Verbindungsstelle trotz möglicher Maßtoleranzen der Rohrteile auftreten können.

Die Lösung der gestellten Aufgabe gelingt durch die im Kennzeichen des Anspruchs 1 angegebenen Merkmale.

Die durch das Ineinandergreifen der Sicke und Gegensicke erreichte Abdichtung wird noch dadurch verbessert, daß sich das aufnehmende Ende unabhängig von vorhandenen Maßtoleranzen stets dicht an das einsteckbare Ende anlegt. Dieses dichte Aneinanderanliegen wird durch die Verkleinerung des Innendurchmessers an mindestens einer Umfangsstelle des aufnehmenden Endes des anderen Rohrteiles erreicht. Infolge dieser Verkleinerung muß das aufnehmende Ende beim Zusammenfügen der beiden Rohrteile stets etwas aufgeweitet werden und legt sich dadurch dicht an das einsteckbare Ende an. Das Aufweiten wird durch den am aufnehmenden Ende vorgesehenen Schlitz ermöglicht. Der die Einstecktiefe begrenzende Anschlag verhindert ein Ineinanderschieben der Rohrteile.

Dadurch, daß das andere Rohrteil auf der dem aufnehmenden Ende abgewandten Seite der Gegensicke ab der Gegensicke einen inneren Durchmesser aufweist der gleich oder kleiner als der Außendurchmesser des einsteckbaren Endes des einen Rohrteiles ist, wird die Einstecktiefe der Rohrteile auf einfache Weise begrenzt.

Eine Abdeckung der Rohrkante des eingesteckten Rohrteiles in Strömungsrichtung ist dadurch möglich, daß auf der dem aufnehmenden Ende des anderen Rohrteiles abgewandten Seite der Gegensicke eine weitere Gegensicke ausgebildet ist.

Die zum dichten Ineinanderfügen notwendige Durchmesserverkleinerung in einem Teilbereich des Umfanges des aufnehmenden Endes wird dadurch erreicht, daß der Rohrmantel des aufnehmenden Endes des anderen Rohrteiles im Bereich des Schlitzes auf einer der Schlitzlänge entsprechenden Länge nach innen eingezogen ist.

Ein Verdrehen der beiden Rohrteile wird dadurch verhindert, daß an dem einsteckbaren und dem aufnehmenden Ende der Rohrteile jeweils mindestens eine einander entsprechende Längssicke ausgebildet ist.

Anhand eines in der Zeichnung dargestellten Ausführungsbeispieles wird der Anmeldungsgegenstand nachfolgend näher beschrieben. Es zeigt:

Fig. 1 zwei Rohrteile im zusammengefügten Zustand,
Fig. 2 das einsteckbare Ende eines Rohrteiles,
Fig. 3 das aufnehmende Ende eines Rohrteiles.

Mit 1 ist das eine und mit 2 das andere Rohrteil bezeichnet, wobei von dem einen Rohrteil 1 das einsteckbare Ende 3 und von dem anderen Rohrteil 2 das aufnehmende Ende 4 dargestellt ist. An dem einsteckbaren Ende 3 ist eine Sicke 5 ausgebildet, die sich über den ganzen Umfang des einen Rohrteiles 1 erstreckt. Ferner ist an diesem Ende 3 mindestens ein sich von der Rohrkante 6 in Richtung der Längsachse dieses Rohrteiles 1 erstreckender Schlitz 7 vorgesehen. Durch diesen Schlitz 7 erhält der Endbereich des einstellbaren Endes 3 eine gewisse Elastizität, sodaß beim Zusammenfügen der beiden Rohrteile 1 und 2 die Sicke 5 über eine an dem anderen Rohrteil 2 ausgebildete Gegensicke 8 gleiten und schließlich mit dieser verrasten kann.

Auf der von dem aufnehmenden Ende abgewandten Seite der Gegensicke 8 ist eine weitere Gegensicke an dem anderen Rohrteil 2 vorhanden. Durch diese weitere Gegensicke 9 wird die Rohrkante 6 des einsteckbaren Endes 3 in Strömungsrichtung abgedeckt.

Das aufnehmende Ende 4 des anderen Rohrteiles 2 ist in seinem inneren Durchmesser $D$ soweit vergrößert, daß das einsteckbare Ende 3 des einen Rohrteiles 1 in das aufnehmende Ende 4 eingeführt werden kann. Ab der Gegensicke 8 ist der innere Durchmesser $D$ wieder auf einen Durchmesser $D_1$

verkleinert, der dem Außendurchmesser D2 des einsteckberen Endes 3 entspricht. Dadurch ist ein weiteres Einschieben des einen Rohrteiles 1 über die Verrastungsstelle von der Sicke 5 und der Gegensicke 8 hinaus nicht möglich. Auf diese Weise wird ein die Einstecktiefe begrenzender Anschlag erreicht.

An dem einsteckbaren Ende 3 und dem aufnehmenden Ende 4 ist jeweils eine Längssicke 10 bzw. 11 ausgebildet. Beim Einstecken des einen Rohrteiles 1 in das andere Rohrteil 2 gelangt die Längssicke 10 des einsteckbaren Endes 3 in die Längssicke 11 des aufnehmenden Endes 4. Dadurch sind beide Rohrteile 1 und 2 gegen ein Verdrehen gesichert. Durch die aufeinandertreffenden Anstiegsflanken 12 und 13 der Längssicken 10 und 11 ist ein zusätzlicher, die Einstecktiefe begrenzender Anschlag gegeben.

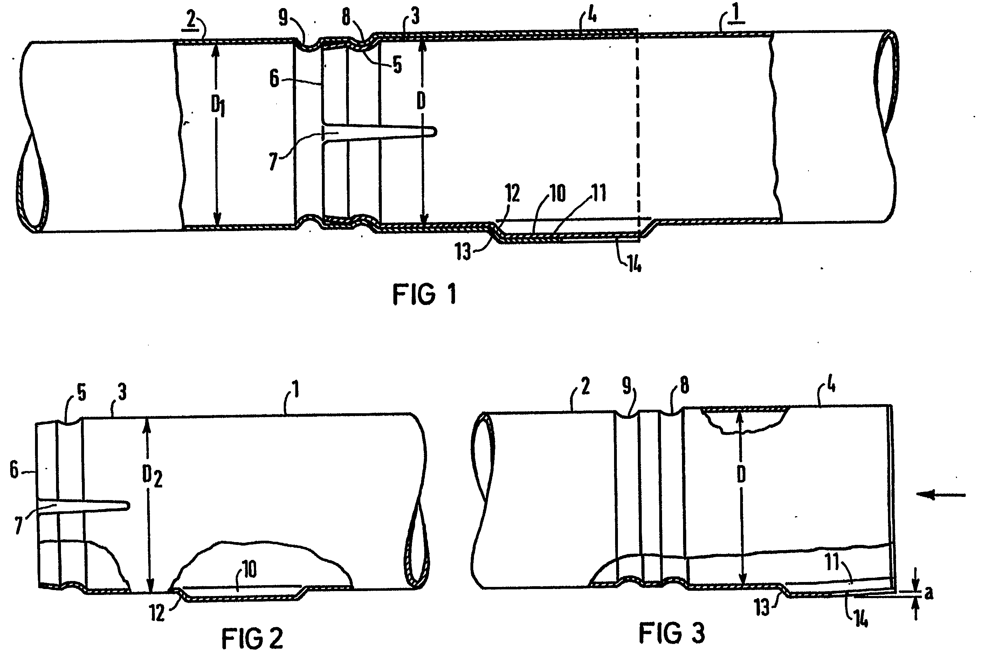

Das aufnehmende Ende 4 weist mindestens einen sich in Längsrichtung des Rohrteiles 2 erstreckenden Schlitz 14 auf. Bei dem dargestellten Ausführungsbeispiel liegt dieser Schlitz 14 in der Wand der Längssicke 11. Wie aus der Darstellung in Fig. 3 zu ersehen ist, ist die Rohrwand des aufnehmenden Endes 4 im Bereich des Schlitzes 14 um ein Maß a nach innen eingezogen. Dies wird durch einen abgeflachten Verlauf der Rohrwand zu beiden Seiten des Schlitzes 14 erreicht. Infolge der durch diese Abflachung bedingten Durchmesserverkleinerung muß beim Zusammenfügen der beiden Rohrteile 1 und 2 eine Aufweitung des Endbereiches des aufnehmenden Endes 4 erfolgen, wodurch zwangsläufig ein dichtes Anliegen des aufnehmenden Endes 4 an dem einsteckbaren Ende 3 gegeben ist.

Da sowohl das einsteckbare Ende 3 als auch das aufnehmende Ende 4 über die ganze Einstecktiefe einen gleichbleibenden Durchmesser aufweisen, ist ein Verkeilen der beiden Rohrteile 1 und 2 ausgeschlossen. In axialer Richtung werden die Rohrteile 1 und 2 allein durch die Verrastung der Sicke 5 und der Gegensicke 8 gehalten. Diese Rastverbindung kann durch entsprechenden Zug an den Rohrteilen 1 und 2 leicht gelöst werden.

**Patentansprüche**

1. Anordnung zum lösbaren Verbinden von zwei Rohrteilen, bei welcher Anordnung die zusammengefügten Enden (3 und 4) der Rohrteile (1 und 2) miteinander verrastet sind, wozu an dem einsteckbaren Ende (3) des einen Rohrteiles (1) eine sich über dessen vollen Umfang erstreckende Sicke (5) und an dem aufnehmenden Ende (4) des anderen Rohrteiles (2) eine entsprechende Gegensicke (8) vorgesehen ist, ferner sowohl das einsteckbare Ende (3) als auch das aufnehmende Ende (4) jeweils mit mindestens einem sich in Längsrichtung des betreffenden Rohrteiles (1 bzw. 2) erstreckenden Schlitz (7 bzw. 14) versehen ist, wobei sich der Schlitz an dem einsteckbaren Ende (3) in Längsrichtung bis über die Sicke (5) hinaus erstreckt, dadurch gekennzeichnet, daß das aufnehmende Ende (4) an mindestens einer Stelle seines Umfanges einen Innendurchmesser aufweist, der geringfügig kleiner als der Außendurchmesser (D2) des einsteckbaren Endes (3) ist, daß ferner ein die Einstecktiefe begrenzender Anschlag zwischen den Enden (3 und 4) der beiden Rohrteile (1 und 2) vorgesehen ist.

2. Anordnung nach Anspruch 1, dadurch gekennzeichnet, daß das andere Rohrteil (2) auf der dem aufnehmenden Ende (4) abgewandten Seite der Gegensicke (8) ab der Gegensicke (8) einen inneren Durchmesser (D1) aufweist, der gleich oder kleiner als der Außendurchmesser (D2) des einsteckbaren Endes (3) des einen Rohrteiles (1) ist.

3. Anordnung nach Anspruch 1 oder 2, dadurch gekennzeichnet, daß auf der dem aufnehmenden Ende (4) des anderen Rohrteiles (2) abgewandten Seite der Gegensicke (8) eine weitere Sicke (9) ausgebildet ist.

4. Anordnung nach einem oder mehreren der vorhergehenden Ansprüche, dadurch gekennzeichnet, daß der Rohrmantel des aufnehmenden Endes (4) des anderen Rohrteiles (2) im Bereich des Schlitzes (14) auf einer der Schlitzlänge entsprechenden Länge zur Durchmesserverkleinerung nach innen eingezogen ist.

5. Anordnung nach einem oder mehreren der vorhergehenden Ansprüche, dadurch gekennzeichnet, daß an dem einsteckbaren und dem aufnehmenden Ende (3 und 4) der Rohrteile (1 und 2) jeweils mindestens eine einander entsprechende Längssicke (10 bzw. 11) ausgebildet ist.

**Claims**

1. An arrangement for the releasable connection of two pipe sections, in which arrangement the joined ends (3 and 4) of the pipe sections (1 and 2) are locked with one another, for which purpose a furrow (5) extending over the entire circumference of the first pipe section (1) is provided in the insertable end (3) of the said first pipe section (1) is provided in the insertable end (3) of the said first pipe section and a corresponding counter furrow (8) is provided in the receiving end (4) of the second pipe section (2), furthermore both the insertable end (3) and the receiving end (4) are each provided with at least one slot (7 or 14) extending in the longitudinal direction of the respective pipe section (1 or 2), the slot in the insertable end (3) extending in the longitudinal direction beyond the furrow (5); characterised in that, at least one point along its circumference, the receiving end (4) has an internal diameter which is slightly smaller than the outer diameter (D2) of the insertable end (3), furthermore in that a stop limiting the insertion depth is provided between the ends (3 and 4) of the two pipe sections (1 and 2).

2. An arrangement according to claim 1, characterised in that, on the side of the counter furrow (8) facing away from the receiving part (4), the second pipe section (2) has an internal diameter (D1) after the counter furrow (8) which is equal to or smaller than the outer diameter (D2) of the insertable end (3) of the first pipe secton (1).

3. An arrangement according to claim 1 or 2, characterised in that a second furrow (9) is formed on the side of the counter furrow (8) facing away from the receiving end (4) of the second pipe section (2).

4. An arrangement according to one or more of the preceding claims, characterised in that, for the diameter reduction, the pipe casing of the receiving part (4) of the second pipe section (2) is indented in the region of the slot (14) over a length corresponding to the slot length.

5. An arrangement according to one or more of the preceding claims, characterised in that at least one corresponding longitudinal furrow (10 or 11) is formed in the insertable and receiving end (3 and 4) of the pipe sections (1 and 2) respectively.

**Revendications**

1. Dispositif pour établir une liaison détachable entre deux tronçons de tubes, dispositif dans lequel les bouts (3 et 4) assemblés des tronçons de tubes (1 et 2) sont reliés l'un à l'autre par crantage, le bout emboîtable (3) d'un premier tronçon de tube (1) présentant, à cet effet, une gorge (5) s'étendant sur toute sa périphérie, tandis qu'une gorge antagoniste ou contre-gorge (8) correspondante est prévue sur le bout récepteur (4) de l'autre tronçon de tube (2), dispositif dans lequel, en outre, le bout emboîtable (3) et le bout récepteur (4) présentent chacun au moins une fente (7 ou 14) s'étendant dans le sens de la longueur du tronçon de tube (1 ou 2) concerné, la fente du bout emboîtable (3) s'étendant longitudinalement au-delà de la gorge (5), caractérisé en ce que le bout récepteur (4) présente, à au moins un endroit de son pourtour, un diamètre intérieur qui est légèrement plus petit que le diamètre extérieur (D2) du bout emboîtable (3) et que, en plus, une butée limitant la profondeur d'enfoncement est prévue entre les bouts (3 et 4) des deux tronçons de tube (1 et 2).

2. Dispositif selon la revendication 1, caractérisé en ce que l'autre tronçon de tube (2) présente, du côté opposé au bout récepteur (4) de la contre-gorge (8), à partir de celle-ci, un diamètre intérieur (D1) qui est égal ou inférieur au diamètre extérieur (D2) du bout emboîtable (3) du premier tronçon de tube (1).

3. Dispositif selon la revendication 1 ou 2, caractérisé en ce qu'une gorge supplémentaire (9) est formée sur l'autre tronçon de tube (2), du côté opposé au bout récepteur (4) de la contre-gorge (8).

4. Dispositif selon une ou plusieurs des revendications précédentes, caractérisé en ce que la paroi du bout récepteur (4) de l'autre tronçon de tube (2) est déformée vers l'intérieur dans la région de la fente (14), sur une longueur correspondant à la longueur de la fente, en vue de la diminution du diamètre.

5. Dispositif selon une ou plusieurs des revendications précédentes, caractérisé en ce qu'au moins une nervure longitudinale (10) est formée sur le bout emboîtable (3) du premier tronçon de tube (1) et au moins une nervure longitudinale (11) correspondante est formée sur le bout récepteur (4) de l'autre tronçon de tube (2).

FIG 1

FIG 2

FIG 3

EP 0 237 904 B1